# EUROPEAN PATENT SPECIFICATION

(11) **EP 3 234 916 B1**
(45) Date of publication and mention of the grant of the patent: **13.02.2019**
(21) Application number: 15731552.4
(22) Date of filing: 19.06.2015
(51) Int. Cl.: G06T 7/215

(54) **SYSTEM, METHOD, AND COMPUTER PROGRAM PRODUCT FOR DETERMINING A FRONT FACING VIEW OF AND CENTERING AN OMNIDIRECTIONAL IMAGE**
SYSTEM, VERFAHREN UND COMPUTERPROGRAMMPRODUKT ZUR BESTIMMUNG EINER FRONTALANSICHT UND ZENTRIERUNG EINES OMNIDIREKTIONALEN BILDES
SYSTÈME, PROCÉDÉ ET PRODUIT DE PROGRAMME INFORMATIQUE POUR DÉTERMINER UNE VUE VERS L'AVANT D'UNE IMAGE OMNIDIRECTIONNELLE ET CENTRER CELLE-CI

(30) Priority: 19.12.2014 US 201414576298
(43) Date of publication of application: 25.10.2017
(73) Proprietor: Sony Corporation, Tokyo 108-0075 (JP)
(72) Inventor: STANKOVIC, Boris, DK-2400 Copenhagen NV (DK)
(74) Representative: Neusser, Sebastian
(86) International application number: PCT/EP2015/063856
(87) International publication number: WO 2016/096166

(56) References cited:
- US-B2- 8 599 266
- HRVOJE SAMIJA ET AL: "Optical flow field segmentation in an omnidirectional camera image based on known camera motion", MIPRO, 2011 PROCEEDINGS OF THE 34TH INTERNATIONAL CONVENTION, IEEE, 23 May 2011 (2011-05-23), pages 805-809, XP031904379, ISBN: 978-1-4577-0996-8
- RADGUI A ET AL: "Adapted approach for omnidirectional egomotion estimation", INTERNATIONAL JOURNAL OF COMPUTER VISION AND IMAGE PROCESSING JAN.-MARCH 2011IGI GLOBALUSA,, vol. 1, no. 1, March 2011 (2011-03), pages 1-13, XP009186196, ISSN: 2155-6997, DOI: 10.4018/IJCVIP.2011010101

## Description

### BACKGROUND

We are entering an era of high resolution omnidirectional imaging. Omnidirectional imaging refers to capturing images with a 360 degree field of view, i.e., a visual field that covers the entire sphere. Since these images are representing a full sphere of view, it is difficult to define which is the front facing view or main view of the image. The present invention aims to solve this issue by providing a definition for the front facing or main view.

US 8,599,266 B2 discloses a digital video imaging system and techniques for efficiently transforming wrapped video images into rectilinear video images, real-time tracking of persons and objects, face recognition of persons, monitoring and tracking head pose of a person and associated perspective view of the person.

SAMIJA, Hrvoje; MARKOVIC, Ivan; PETROVIC, Ivan. Optical flow field segmentation in an omnidirectional camera image based on known camera motion. In: MIPRO, 2011 Proceedings of the 34th International Convention. IEEE, 2011. p. 805-809 discloses optical flow analysis in an omnidirectional camera image, in order to segment out dynamic objects from ego-motion caused optical flow. Estimation of the optical flow is performed in the omnidirectional image. By knowing the ego-motion, it is possible to calculate the resulting optical flow field with the necessary assumption of planarity of the surrounding scene.

RADGUI, A., et al. Adapted Approach for Omnidirectional Egomotion Estimation. Intelligent Computer Vision and Image Processing: Innovation, Application, and Design: Innovation, Application, and Design, 2013, p. 1 discloses egomotion estimation which is based principally on the estimation of the optical flow in the image. For omnidirectional images, the 2D motion is estimated using methods developed for prospective images. The motion field is calculated using an adapted method which takes into account the distortions existing in the omnidirectional image.

### BRIEF SUMMARY

Embodiments of the invention are directed to systems, methods and computer program products for determining a front facing view for a camera and centering an omnidirectional image captured by the camera. A method for determining a front facing view for a camera and centering an omnidirectional image captured by the camera is provided according to claim 1.

In some embodiments, the motion is equal to or greater than a threshold motion.

In some embodiments, the method further comprises determining gyroscope information for a gyroscope in the camera.

In some embodiments, the azimuthal angle and the polar angle are determined further based on the gyroscope information.

In some embodiments, the method further comprises determining an adjustment that needs to be made to the azimuthal angle and the polar angle based on an amount of the motion.

In some embodiments, the method further comprises determining compass information for a compass in the camera.

In some embodiments, the front facing view is determined further based on the compass information.

In some embodiments, the method further comprises determining a direction of motion of an area associated with the front facing view.

In some embodiments, the method further comprises determining a direction of motion of an area to the left or right of the area associated with the front facing view from the perspective of the camera.

In some embodiments, the front facing view is front facing from a perspective of the camera.

In some embodiments, the front facing view is determined before or at the time of capturing the image.

In some embodiments, the method further comprises smoothing the image using a smoothing filter in the camera.

In some embodiments, the average motion vector is calculated either in the spatial domain or in the Fourier domain.

In some embodiments, the camera comprises a six axis gyroscope, wherein three of six axes are for determining a linear motion of the camera and a remaining three of the six axes are for determining a rotational motion of the camera.

In some embodiments, the front facing view is determined with an amount of power less than a threshold power when the camera has motion less than a threshold amount of motion, and wherein the front facing view is determined with an amount of power greater than the threshold power when the camera has motion greater than the threshold amount of motion.

In some embodiments, the camera comprises a single camera. A lens of the camera enables capturing of images with a 270 degree polar angle and 360 degree azimuthal angle.

In some embodiments, the camera comprises at least two cameras.

In some embodiments, the camera is comprised in at least one of a mobile computing device, a non-mobile computing device, a mobile phone, a television, a watch, or a tablet computing device.

In some embodiments, an apparatus according to claim 14 is provided for determining a front facing view for a camera and centering an omnidirectional image captured by the camera.

In some embodiments, the apparatus further comprises a gyroscope and a compass.

In some embodiments, the apparatus further comprises a smoothing filter.

In some embodiments, a computer program product according to claim 15 is provided for determining a front facing view for a camera and centering an omnidirectional image captured by the camera.

### BRIEF DESCRIPTION OF THE DRAWINGS

Having thus described embodiments of the invention in general terms, reference will now be made to the accompanying drawings, where:
Figure 1 is an exemplary sphere, in accordance with embodiments of the present invention;
Figures 2 is an exemplary method, in accordance with embodiments of the present invention;
Figure 3 is an exemplary device comprising a camera, in accordance with embodiments of the present invention.

### DETAILED DESCRIPTION OF EMBODIMENTS OF THE INVENTION

Embodiments of the present invention now may be described more fully hereinafter with reference to the accompanying drawings, in which some, but not all, embodiments of the invention are shown. Indeed, the invention may be embodied in many different forms and should not be construed as limited to the embodiments set forth herein; rather, these embodiments are provided so that this disclosure may satisfy applicable legal requirements. Like numbers refer to like elements throughout.

The present invention is directed to defining the front facing viewing direction or view in omnidirectional images (still images and/or moving images or video). The present invention is also directed to centering omnidirectional images. A point in a spherical coordinate system is defined by three quantities: a radial distance of the point from a fixed origin, a polar angle measured from a fixed zenith (imaginary point above the defined point) direction, and an azimuth angle of its orthogonal projection on a reference plane that passes through the origin and is orthogonal to the zenith, measured from a fixed reference direction on the reference plane. An imaginary point below the defined point is referred to as the nadir. A gyro or accelerometer in the camera can be used to center the zenith or nadir axis. Additionally or alternatively, a compass can be used to obtain the azimuthal angle and use it as a reference point.

In the steady-state case, it can be difficult to estimate which direction is facing forwards from the perspective of the camera and thereby to say which is the main view of an omnidirectional image. As used herein, the steady state case refers to the case where the camera shows no movement or limited movement (e.g., less than a threshold movement) at the time of capturing the image. In other embodiments, the steady state case refers to the case where the object to be captured by the camera shows no movement or limited movement (e.g., less than a threshold movement).

The view (e.g., the main view) can be a choice of the user of the camera. Certain preset views can be provided to the user. For example, a preset view can be a front facing view (or back facing view) of the camera from the perspective of the camera, or views to the left or right side of the camera from the perspective of the camera. Additionally or alternatively, the preset view can be a top or bottom view from the perspective of the camera. In some embodiments, the main view is based on how the user holds the camera at the time of capturing the image. How the user holds the camera refers to a direction and/or orientation of the camera at least one of before, at the time of, or after capturing the image. As used herein, the perspective of the user of the camera refers to the perspective of user capturing an image using a forward facing camera, i.e., the camera lens and the user's eyes are focused in the same direction or focused on the same object in the image frame. The main view can be selected either before, at the time of, or after capturing the image. Therefore, the various embodiments described herein can be applied to both viewfinder mode (before capturing the image) and playback mode (after capturing the image).

In the dynamic case where the user (and thereby the camera) capturing the image using a camera is moving (e.g., along at least one of a horizontal plane or a vertical plane) at the time of capturing the image, the main view can be estimated using the following procedure. The front facing area from the perspective of the camera is zoomed into (e.g., equal to or greater than a threshold magnification). The area to the left of the front facing area from the perspective of the camera has motion towards the left of the camera from the perspective of the camera. The area to the right of the front facing area from the perspective of the camera has motion towards the right of the camera from the perspective of the camera.

If there is motion in the zenith axis (e.g., vertical plane), the front facing area has motion upwards from the perspective of the camera. The area to the left of the front facing area (from the perspective of the camera) has motion upwards from the perspective of the camera. The area to the right of the front facing area (from the perspective of the camera) has motion upwards from the perspective of the camera. The front facing direction becomes a vector reference defined by a vector length, an azimuthal angle, and a polar angle. Therefore, the camera is able to determine the front facing direction, both when the camera is moving (e.g., along a horizontal plane or a vertical plane) and/or when the camera is still, and enable the user of the camera to use this front facing direction as the main view.

Therefore, the present invention enables a user to select the main view based on information associated with a compass and/or gyroscope located in the camera. The user can select either the north, south, west, or east direction based on compass information, and can select an azimuthal angle and/or a polar angle based on gyroscope information. In some embodiments, this main view may also be referred to as a default view.

In some embodiments, the main view can be selected based on estimating both the motion of the camera and gyroscope information. The main view can be selected by determining the azimuthal angle or a correction in the azimuthal angle based on the movement of the camera, and by determining the polar angle based on gyroscope information.

In some embodiments, the main view (defined by the azimuthal angle and the polar angle) can be selected just based on estimating the motion of the camera (and without estimating gyroscope information). The motion of the camera enables determination of adjustment that needs to be made to the azimuthal angle and the polar angle.

When the user of the camera is turning and/or tilting the camera, there is a shift in which areas around the camera are front facing, rear facing, left facing, right facing, top facing, and down facing. For this reason, the main view needs to be based on the entire omnidirectional image. For the purpose of defining the main view, the present invention applies to omnidirectional images that cover a full or part of a sphere. In some embodiments, the present invention can be applied to an image (or multiple images) captured by multiple distinct cameras (e.g., cameras capable of capturing omnidirectional images).

The present invention also provides a smoothing filter for instances where there is a sudden change in the direction of the main view (i.e., when the camera switches from steady state to dynamic state, or when the camera switches from a first dynamic state to a second dynamic state). The smoothing viewer enables smooth movement of the main view of the image from a first main view direction to a second main view direction.

The present invention provides a windowing approach for evaluating an image. The present invention evaluates an image in smaller sections (e.g., 8 x 16) and calculates an average motion vector for each section (e.g., 128 sections). The motion estimate can be calculated at least one of in the spatial or Fourier domains. Subsequently, a search function evaluates the motion vectors of each section and determines two sections that have mirrored vectors with an equal magnitude. The determination of these sections enables centering of the image. The main view is determined at least one of before, during, or after establishing or selecting the main view or front facing view.

In some embodiments, a gyroscope and/or accelerometer located in the camera is used to determine the zenith and/or nadir. Essentially, the gyroscope and/or accelerometer uses the Earth's gravitational force to determine the down direction (i.e., the direction towards the Earth's surface). A compass in the camera is used to determine the north, south, east, or west direction.

Alternatively or additionally, a six axis gyroscope and/or accelerometer is provided in the camera. Three of the six axes (first axis, second axis, third axis) are used to determine a linear motion of the camera and/or to determine the direction of gravity and/or the gravitational force in the down direction (i.e., the direction towards the Earth's surface). The remaining three of the six axes (fourth axis, fifth axis, sixth axis) are used to determine rotational movement and/or acceleration of the camera. In such embodiments, the camera can operate in an idle mode when it does not spend energy or power (or less than a threshold amount of energy or power greater than zero) in determining the front facing direction or view. The camera operates in an idle mode when it is not moving or when the camera's movement (at least one of linear and/or rotational movement) is less than a threshold amount of movement. The camera operates in a normal mode (or turbo mode) when it uses more than a threshold amount of power (upto a maximum amount of power) for determining the front facing direction. The camera operates in the normal mode when it is moving or when the camera's movement (at least one of linear and/or rotational movement) is greater than the threshold amount of movement.

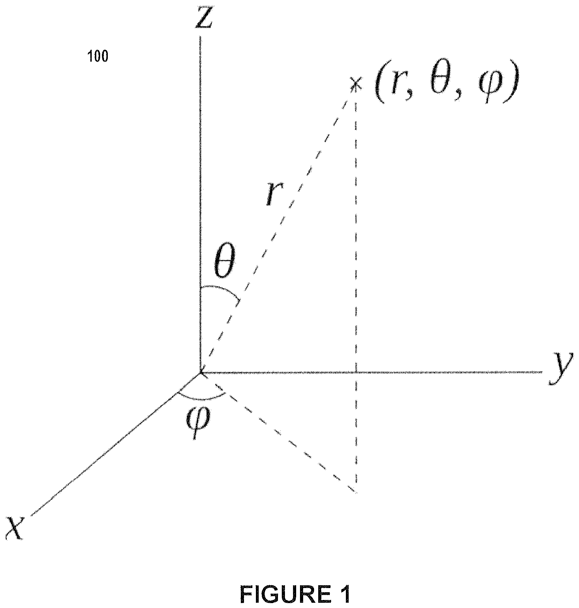

Referring now to Figure 1, Figure 1 illustrates a spherical coordinate system 100. The point x may be the position of the camera and is defined by spherical coordinates (r, θ, ϕ): radial distance r (or vector distance), polar angle θ (theta), and azimuthal angle ϕ (phi).

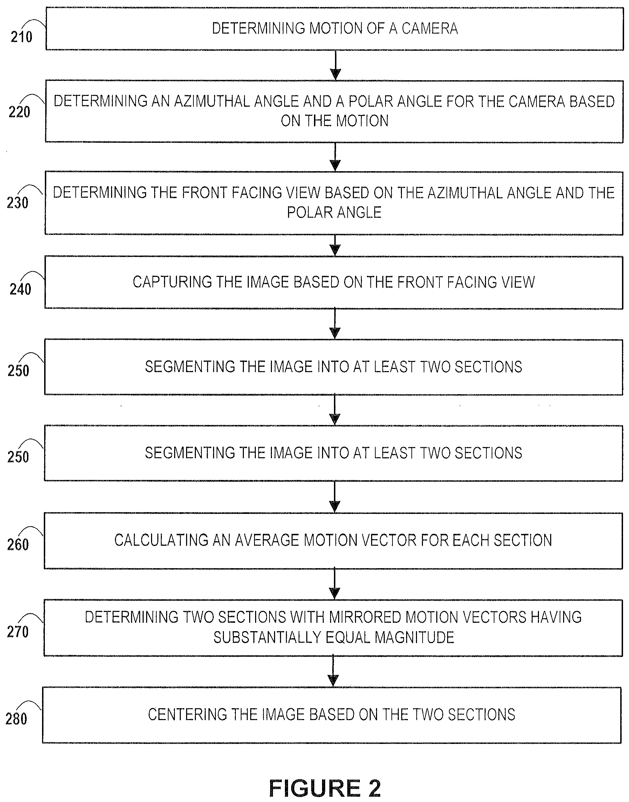

Referring now to Figure 2, Figure 2 presents a method for determining a front facing view for a camera (from the perspective of the camera) and centering an omnidirectional image captured by the camera. At block 210, the method comprises determining motion of the camera (e.g., equal to or greater than a threshold motion). At block 220, the method comprises determining an azimuthal angle and a polar angle for the camera based on the motion. In some embodiments, the azimuthal angle and the polar angle are determined further based on gyroscope information associated with a gyroscope in the camera. In some embodiments, the camera further determines an amount of adjustment that needs to be made to the azimuthal angle and the polar angle based on the amount of motion of the camera at least one of before, at the time of, or after capturing the image. At block 230, the method comprises determining the front facing view based on the azimuthal angle and the polar angle. In some embodiments, the method further comprises determining compass information for a compass in the camera. In such embodiments, the front facing view is determined further based on the compass information. In some embodiments, the method further comprises determining a direction of motion of an area associated with the front facing view, and determining a direction of motion of an area to the left or right of the area associated with the front facing view from the perspective of the camera.

At block 240, the method comprises capturing the image based on the front facing view. The front facing view is determined before or at the time of capturing the image. In some embodiments, the method further comprises smoothing the image using a smoothing filter in the camera. At block 250, the method comprises segmenting the image into at least two sections. At block 260, the method comprises calculating an average motion vector for each section. At block 270, the method comprises determining two sections with mirrored motion vectors having substantially equal magnitude. At block 280, the method comprises centering the image based on the two sections. In some embodiments, the image comprises at least two images, and the camera comprises at least two cameras. In some embodiments, the camera comprises a single camera. A lens of the camera enables capturing of images with a 270 degree polar angle and 360 degree azimuthal angle. In some embodiments, the camera is comprised in at least one of a mobile computing device, a non-mobile computing device, a mobile phone, a television, a watch, or a tablet computing device.

The invention is not limited to any particular types of devices comprising cameras. Examples of devices include mobile phones or other mobile computing devices, mobile televisions, laptop computers, smart screens, tablet computers or tablets, portable desktop computers, e-readers, scanners, portable media devices, gaming devices, cameras or other image-capturing devices, headgear, eyewear, watches, bands (e.g., wristbands) or other wearable devices, or other portable computing or non-computing devices.

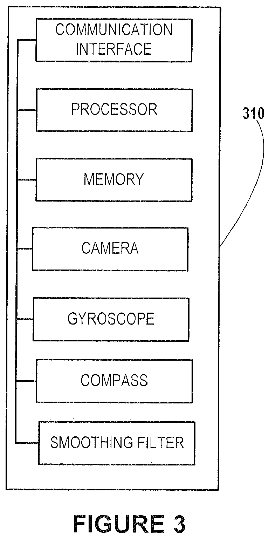

Referring now to Figure 3, Figure 3 presents an exemplary device 310 comprising a communication interface, a processor, a memory, and a module stored in the memory, executable by the processor, and configured to perform the various processes described herein. Each communication interface described herein enables communication with other systems. Additionally, the device 310 includes a camera, a gyroscope, a compass, and smoothing filter.

Each processor described herein generally includes circuitry for implementing audio, visual, and/or logic functions. For example, the processor may include a digital signal processor device, a microprocessor device, and various analog-to-digital converters, digital-to-analog converters, and other support circuits. Control and signal processing functions of the system in which the processor resides may be allocated between these devices according to their respective capabilities. The processor may also include functionality to operate one or more software programs based at least partially on computer-executable program code portions thereof, which may be stored, for example, in a memory.

Each memory may include any computer-readable medium. For example, memory may include volatile memory, such as volatile random access memory (RAM) having a cache area for the temporary storage of data. Memory may also include non-volatile memory, which may be embedded and/or may be removable. The non-volatile memory may additionally or alternatively include an EEPROM, flash memory, and/or the like. The memory may store any one or more of pieces of information and data used by the system in which it resides to implement the functions of that system.

The various features described with respect to any embodiments described herein are applicable to any of the other embodiments described herein. As used herein, the terms data and information may be used interchangeably. Although many embodiments of the present invention have just been described above, the present invention may be embodied in many different forms and should not be construed as limited to the embodiments set forth herein; rather, these embodiments are provided so that this disclosure will satisfy applicable legal requirements. Also, it will be understood that, where possible, any of the advantages, features, functions, devices, and/or operational aspects of any of the embodiments of the present invention described and/or contemplated herein may be included in any of the other embodiments of the present invention described and/or contemplated herein, and/or vice versa. In addition, where possible, any terms expressed in the singular form herein are meant to also include the plural form and/or vice versa, unless explicitly stated otherwise. As used herein, "at least one" shall mean "one or more" and these phrases are intended to be interchangeable. Accordingly, the terms "a" and/or "an" shall mean "at least one" or "one or more," even though the phrase "one or more" or "at least one" is also used herein. Like numbers refer to like elements throughout.

As will be appreciated by one of ordinary skill in the art in view of this disclosure, the present invention may include and/or be embodied as an apparatus (including, for example, a system, machine, device, computer program product, and/or the like), as a method (including, for example, a business method, computer-implemented process, and/or the like), or as any combination of the foregoing. Accordingly, embodiments of the present invention may take the form of an entirely business method embodiment, an entirely software embodiment (including firmware, resident software, micro-code, stored procedures, etc.), an entirely hardware embodiment, or an embodiment combining business method, software, and hardware aspects that may generally be referred to herein as a "system." Furthermore, embodiments of the present invention may take the form of a computer program product that includes a computer-readable storage medium having one or more computer-executable program code portions stored therein. As used herein, a processor, which may include one or more processors, may be "configured to" perform a certain function in a variety of ways, including, for example, by having one or more general-purpose circuits perform the function by executing one or more computer-executable program code portions embodied in a computer-readable medium, and/or by having one or more application-specific circuits perform the function.

It will be understood that any suitable computer-readable medium may be utilized. The computer-readable medium may include, but is not limited to, a non-transitory computer-readable medium, such as a tangible electronic, magnetic, optical, electromagnetic, infrared, and/or semiconductor system, device, and/or other apparatus. For example, in some embodiments, the non-transitory computer-readable medium includes a tangible medium such as a portable computer diskette, a hard disk, a random access memory (RAM), a read-only memory (ROM), an erasable programmable read-only memory (EPROM or Flash memory), a compact disc read-only memory (CD-ROM), and/or some other tangible optical and/or magnetic storage device. In other embodiments of the present invention, however, the computer-readable medium may be transitory, such as, for example, a propagation signal including computer-executable program code portions embodied therein.

One or more computer-executable program code portions for carrying out operations of the present invention may include object-oriented, scripted, and/or unscripted programming languages, such as, for example, Java, Perl, Smalltalk, C++, SAS, SQL, Python, Objective C, JavaScript, and/or the like. In some embodiments, the one or more computer-executable program code portions for carrying out operations of embodiments of the present invention are written in conventional procedural programming languages, such as the "C" programming languages and/or similar programming languages. The computer program code may alternatively or additionally be written in one or more multi-paradigm programming languages, such as, for example, F#.

Some embodiments of the present invention are described herein with reference to flowchart illustrations and/or block diagrams of apparatus and/or methods. It will be understood that each block included in the flowchart illustrations and/or block diagrams, and/or combinations of blocks included in the flowchart illustrations and/or block diagrams, may be implemented by one or more computer-executable program code portions. These one or more computer-executable program code portions may be provided to a processor of a general purpose computer, special purpose computer, and/or some other programmable information processing apparatus in order to produce a particular machine, such that the one or more computer-executable program code portions, which execute via the processor of the computer and/or other programmable information processing apparatus, create mechanisms for implementing the steps and/or functions represented by the flowchart(s) and/or block diagram block(s).

The one or more computer-executable program code portions may be stored in a transitory and/or non-transitory computer-readable medium (e.g., a memory, etc.) that can direct, instruct, and/or cause a computer and/or other programmable information processing apparatus to function in a particular manner, such that the computer-executable program code portions stored in the computer-readable medium produce an article of manufacture including instruction mechanisms which implement the steps and/or functions specified in the flowchart(s) and/or block diagram block(s).

The one or more computer-executable program code portions may also be loaded onto a computer and/or other programmable information processing apparatus to cause a series of operational steps to be performed on the computer and/or other programmable apparatus. In some embodiments, this produces a computer-implemented process such that the one or more computer-executable program code portions which execute on the computer and/or other programmable apparatus provide operational steps to implement the steps specified in the flowchart(s) and/or the functions specified in the block diagram block(s). Alternatively, computer-implemented steps may be combined with, and/or replaced with, operator- and/or human-implemented steps in order to carry out an embodiment of the present invention.

While certain exemplary embodiments have been described and shown in the accompanying drawings, it is to be understood that such embodiments are merely illustrative of and not restrictive on the broad invention, and that this invention not be limited to the specific constructions and arrangements shown and described, since various other changes, combinations, omissions, modifications and substitutions, in addition to those set forth in the above paragraphs, are possible. Those skilled in the art will appreciate that various adaptations, modifications, and combinations of the just described embodiments can be configured without departing from the scope of the invention. Therefore, it is to be understood that, within the scope of the appended claims, the invention may be practiced other than as specifically described herein.

## Claims

1. A method for determining a front facing view for a camera and centering an omnidirectional image captured by the camera, the method comprising:
determining motion of the camera;
determining an azimuthal angle (ϕ) and a polar angle (θ) for the camera based on the motion;
determining the front facing view based on the azimuthal angle (ϕ) and the polar angle (θ);
capturing the image based on the front facing view;
segmenting the image into at least two sections;
calculating an average motion vector for each section;
determining two sections with mirrored motion vectors having substantially equal magnitude; and
centering the image based on the two sections with mirrored motion vectors.

2. The method of claim 1, wherein the motion is equal to or greater than a threshold motion.

3. The method of claim 1 or claim 2, further comprising determining gyroscope information for a gyroscope in the camera, wherein the azimuthal angle (ϕ) and the polar angle (θ) are determined further based on the gyroscope information.

4. The method of any one of claims 1-3, further comprising determining an adjustment that needs to be made to the azimuthal angle (ϕ) and the polar angle (θ) based on an amount of the motion.

5. The method of any one of claims 1-4, further comprising determining compass information for a compass in the camera.

6. The method of claim 5, wherein the front facing view is determined further based on the compass information.

7. The method of any one of claims 1-6, further comprising determining a direction of motion of an area associated with the front facing view, and optionally determining a direction of motion of an area to the left or right of the area associated with the front facing view from the perspective of the camera.

8. The method of any one of claims 1-7, wherein the front facing view is front facing from a perspective of the camera, or is determined before or at the time of capturing the image.

9. The method of any one of claims 1-8, further comprising smoothing the image using a smoothing filter in the camera.

10. The method of any one of claims 1-9, wherein the average motion vector is calculated either in the spatial domain or in the Fourier domain.

11. The method of any one of claims 1-10, wherein the camera comprises a six axis gyroscope, wherein three of six axes are for determining a linear motion of the camera and a remaining three of the six axes are for determining a rotational motion of the camera.

12. The method of any one of claims 1-11, wherein the front facing view is determined with an amount of power less than a threshold power when the camera has motion less than a threshold amount of motion, and wherein the front facing view is determined with an amount of power greater than the threshold power when the camera has motion greater than the threshold amount of motion.

13. The method of any one of claims 1-12, wherein the camera comprises at least two cameras.

14. An apparatus (310) for determining a front facing view for a camera and centering an omnidirectional image captured by the camera, the apparatus comprising:
a memory;
a processor; and
a module stored in the memory, executable by the processor, and configured to:
determine motion of the camera;
determine an azimuthal angle (ϕ) and a polar angle (θ) for the camera based on the motion;
determine the front facing view based on the azimuthal angle (ϕ) and the polar angle (θ);
capture the image based on the front facing view;
segment the image into at least two sections;
calculate an average motion vector for each section;
determine two sections with mirrored motion vectors having substantially equal magnitude;
center the image based on the two sections with mirrored motion vectors.

15. A computer program product for determining a front facing view for a camera and centering an omnidirectional image captured by the camera, the computer program product comprising:
a non-transitory computer-readable medium comprising a set of codes for causing a computer (310) to:
determine motion of the camera;
determine an azimuthal angle (ϕ) and a polar angle (θ) for the camera based on the motion;
determine the front facing view based on the azimuthal angle (ϕ) and the polar angle (θ);
capture the image based on the front facing view;
segment the image into at least two sections;
calculate an average motion vector for each section;
determine two sections with mirrored motion vectors having substantially equal magnitude;
center the image based on the two sections with mirrored motion vectors.

## Patentansprüche

1. Verfahren zum Bestimmen einer Frontsicht für eine Kamera und zum Zentrieren eines von der Kamera aufgenommenen Omnidirektional-Bildes, wobei das Verfahren umfasst:
Bestimmen von Bewegung der Kamera;
Bestimmen eines Azimutwinkels (ϕ) und eines Polarwinkels (θ) für die Kamera basierend auf der Bewegung;
Bestimmen der Frontsicht basierend auf dem Azimutwinkel (ϕ) und dem Polarwinkel (θ);
Erfassen des Bildes basierend auf der Frontsicht;
Segmentieren des Bildes in mindestens zwei Abschnitte;
Berechnen eines mittleren Bewegungsvektors für jeden Abschnitt;
Bestimmen von zwei Abschnitten mit gespiegelten Bewegungsvektoren mit im Wesentlichen gleichem Betrag; und
Zentrieren des Bildes basierend auf den beiden Abschnitten mit gespiegelten Bewegungsvektoren.

2. Verfahren nach Anspruch 1, wobei die Bewegung gleich oder größer als eine Schwellenbewegung ist.

3. Verfahren nach Anspruch 1 oder Anspruch 2, ferner umfassend das Bestimmen einer Gyroskopinformation für ein Gyroskop in der Kamera, wobei der Azimutwinkel (ϕ) und der Polarwinkel (θ) ferner basierend auf der Gyroskopinformation bestimmt werden.

4. Verfahren nach einem der Ansprüche 1 bis 3, ferner umfassend das Bestimmen einer Anpassung, die an dem Azimutwinkel (ϕ) und dem Polarwinkel (θ) vorgenommen werden muss, basierend auf einem Bewegungsbetrag.

5. Verfahren nach einem der Ansprüche 1 bis 4, ferner umfassend das Bestimmen einer Kompassinformation für einen Kompass in der Kamera.

6. Verfahren nach Anspruch 5, wobei die Frontsicht ferner basierend auf der Kompassinformation bestimmt wird.

7. Verfahren nach einem der Ansprüche 1 bis 6, ferner umfassend Bestimmen einer Bewegungsrichtung eines Bereichs, welcher der Frontsicht zugeordnet ist, und optional Bestimmen einer Bewegungsrichtung eines Bereichs links oder rechts des zugehörigen Bereichs der Frontsicht aus der Perspektive der Kamera.

8. Verfahren nach einem der Ansprüche 1 bis 7, wobei die Frontsicht aus einer Perspektive der Kamera nach vorne gerichtet ist, oder vor oder zu dem Zeitpunkt des Aufnehmens des Bildes bestimmt wird.

9. Verfahren nach einem der Ansprüche 1 bis 8, ferner umfassend Glätten des Bildes mittels eines Glättungsfilters in der Kamera.

10. Verfahren nach einem der Ansprüche 1 bis 9, wobei der mittlere Bewegungsvektor entweder im Ortsraum oder im Fourierraum berechnet wird.

11. Verfahren nach einem der Ansprüche 1 bis 10, wobei die Kamera ein Sechs-Achsen-Gyroskop umfasst, wobei drei von sechs Achsen zum Bestimmen einer linearen Bewegung der Kamera und verbleibende drei der sechs Achsen zum Bestimmen einer Drehbewegung der Kamera dienen.

12. Verfahren nach einem der Ansprüche 1 bis 11, wobei die Frontsicht mit einer Leistungsmenge bestimmt wird, die kleiner als eine Schwellenleistung ist, wenn die Kamera eine Bewegung aufweist, die weniger als ein Schwellenwert für eine Bewegungsbetrag ist, und wobei die Frontsicht mit einer Leistungsmenge bestimmt wird, die größer als der Schwellenwert ist, wenn die Kamera eine Bewegung aufweist, die größer ist als der Schwellenwert für den Bewegungsbetrag.

13. Verfahren nach einem der Ansprüche 1 bis 12, wobei die Kamera mindestens zwei Kameras umfasst.

14. Vorrichtung (310) zum Bestimmen einer Frontsicht für eine Kamera und zum Zentrieren eines von der Kamera aufgenommenen Omnidirektional-Bildes, wobei die Vorrichtung umfasst:
einen Speicher;
einen Prozessor; und
ein im Speicher abgelegtes, vom Prozessor ausführbares Modul, welches eingerichtet ist zum:
Bestimmen von Bewegung der Kamera;
Bestimmen eines Azimutwinkels (ϕ) und eines Polarwinkels (θ) für die Kamera basierend auf der Bewegung;
Bestimmen der Frontsicht basierend auf dem Azimutwinkel (ϕ) und dem Polarwinkel (θ);
Erfassen des Bildes basierend auf der Frontsicht;
Segmentieren des Bildes in mindestens zwei Abschnitte;
Berechnen eines mittleren Bewegungsvektors für jeden Abschnitt;
Bestimmen von zwei Abschnitten mit gespiegelten Bewegungsvektoren mit im Wesentlichen gleichem Betrag;
Zentrieren des Bildes basierend auf den beiden Abschnitten mit gespiegelten Bewegungsvektoren.

15. Computerprogrammprodukt zum Bestimmen einer Frontsicht für eine Kamera und zum Zentrieren eines von der Kamera aufgenommenen Omnidirektional-Bildes, wobei das Computerprogrammprodukt umfasst:
ein nichtflüchtiges computerlesbares Medium, das einen Satz von Anweisungen umfasst, um einen Computer (310) zu veranlassen, folgende Schritte durchzuführen:
Bestimmen von Bewegung der Kamera;
Bestimmen eines Azimutwinkels (ϕ) und eines Polarwinkels (θ) für die Kamera basierend auf der Bewegung;
Bestimmen der Frontansicht basierend auf dem Azimutwinkel (ϕ) und dem Polarwinkel (θ);
Erfassen des Bildes basierend auf der Frontsicht;
Segmentieren des Bildes in mindestens zwei Abschnitte;
Berechnen eines mittleren Bewegungsvektors für jeden Abschnitt;
Bestimmen von zwei Abschnitten mit gespiegelten Bewegungsvektoren mit im Wesentlichen gleichem Betrag;
Zentrieren des Bildes basierend auf den beiden Abschnitten mit gespiegelten Bewegungsvektoren.

## Revendications

1. Procédé pour déterminer une vue de face pour une caméra et centrer une image omnidirectionnelle capturée par la caméra, le procédé consistant à :
déterminer le mouvement de la caméra ;
déterminer un angle azimutal (ϕ) et un angle polaire (θ) pour la caméra en fonction du mouvement ;
déterminer la vue de face en fonction de l'angle azimutal (ϕ) et de l'angle polaire (θ) ;
capturer l'image sur la base de la vue de face ;
segmenter l'image en au moins deux sections ;
calculer un vecteur de mouvement moyen pour chaque section ;
déterminer deux sections ayant des vecteurs de mouvement en miroir et présentant des amplitudes sensiblement égales ; et
centrer l'image sur la base des deux sections ayant des vecteurs de mouvement en miroir.

2. Procédé selon la revendication 1, dans lequel le mouvement est égal ou supérieur à un mouvement de seuil.

3. Procédé selon la revendication 1 ou la revendication 2, consistant en outre à déterminer des informations de gyroscope pour un gyroscope présent dans la caméra, dans lequel l'angle azimutal (ϕ) et l'angle polaire (θ) sont en outre déterminés sur la base des informations de gyroscope.

4. Procédé selon l'une quelconque des revendications 1 à 3, consistant en outre à déterminer un ajustement qui doit être réalisé sur l'angle azimutal (ϕ) et l'angle polaire (θ) sur la base d'une quantité de mouvement.

5. Procédé selon l'une quelconque des revendications 1 à 4, consistant en outre à déterminer des informations de boussole pour une boussole présente dans la caméra.

6. Procédé selon la revendication 5, dans lequel la vue de face est en outre déterminée sur la base des informations de boussole.

7. Procédé selon l'une quelconque des revendications 1 à 6, consistant en outre à déterminer une direction de mouvement d'une zone associée à la vue de face, et à déterminer facultativement une direction de mouvement d'une zone située vers la gauche ou vers la droite de la zone associée à la vue de face depuis la perspective de la caméra.

8. Procédé selon l'une quelconque des revendications 1 à 7, dans lequel la vue de face est tournée vers l'avant par rapport à une perspective de la caméra, ou est déterminée avant ou au moment de la capture de l'image.

9. Procédé selon l'une quelconque des revendications 1 à 8, consistant en outre à lisser l'image en utilisant un filtre de lissage présent dans la caméra.

10. Procédé selon l'une quelconque des revendications 1-9, dans lequel le vecteur de mouvement moyen est calculé soit dans le domaine spatial, soit dans le domaine de Fourier.

11. Procédé selon l'une quelconque des revendications 1 à 10, dans lequel la caméra comprend un gyroscope à six axes, dans lequel trois des six axes sont destinés à déterminer un mouvement linéaire de la caméra et les trois axes restants des six axes sont destinés à déterminer un mouvement de rotation de la caméra.

12. Procédé selon l'une quelconque des revendications 1-11, dans lequel la vue de face est déterminée avec un niveau de puissance inférieur à une puissance de seuil lorsque la caméra est animée d'un mouvement inférieur à une quantité de mouvement de seuil, et dans lequel la vue de face est déterminée avec un niveau de puissance supérieur à la puissance de seuil lorsque la caméra est animée d'un mouvement supérieur à la quantité de mouvement de seuil.

13. Procédé selon l'une quelconque des revendications 1 à 12, dans lequel la caméra comprend au moins deux caméras.

14. Appareil (310) pour déterminer une vue de face pour une caméra et centrer une image omnidirectionnelle capturée par la caméra, l'appareil comprenant :
une mémoire ;
un processeur ; et
un module stocké en mémoire, exécutable par le processeur et configuré pour :
déterminer le mouvement de la caméra ;
déterminer un angle azimutal (ϕ) et un angle polaire (θ) pour la caméra sur la base du mouvement ;
déterminer la vue de face sur la base de l'angle azimutal (ϕ) et de l'angle polaire (θ) ;
capturer l'image sur la base de la vue de face ;
segmenter l'image en au moins deux sections ;
calculer un vecteur de mouvement moyen pour chaque section ;
déterminer deux sections ayant des vecteurs de mouvement en miroir et présentant des amplitudes sensiblement égales ;
centrer l'image sur la base des deux sections ayant des vecteurs de mouvement en miroir.

15. Produit de programme informatique pour déterminer une vue de face pour une caméra et centrer une image omnidirectionnelle capturée par la caméra, le produit de programme informatique comprenant :
un support non transitoire lisible par ordinateur comprenant un ensemble de codes destinés à amener un ordinateur (310) à :
déterminer le mouvement de la caméra ;
déterminer un angle azimutal (ϕ) et un angle polaire (θ) pour la caméra sur la base du mouvement ;
déterminer la vue de face sur la base de l'angle azimutal (ϕ) et de l'angle polaire (θ) ;
capturer l'image sur la base de la vue de face ;
segmenter l'image en au moins deux sections ;
calculer un vecteur de mouvement moyen pour chaque section ;
déterminer deux sections ayant des vecteurs de mouvement en miroir et présentant des amplitudes sensiblement égales ; centrer l'image sur la base des deux sections ayant des vecteurs de mouvement en miroir.
